# EUROPEAN PATENT SPECIFICATION

(11) **EP 4 135 089 B1**
(45) Date of publication and mention of the grant of the patent: **30.09.2026**
(21) Application number: 22781566.9
(22) Date of filing: 29.03.2022
(51) Int. Cl.: H01M 10/0562, H01M 10/0565, H01M 4/13, H01M 10/052, H01M 4/02

(54) **ALL-SOLID-STATE BATTERY COMPRISING TWO TYPES OF SOLID ELECTROLYTE LAYERS**
FESTKÖRPERBATTERIE MIT ZWEI ARTEN VON FESTELEKTROLYTSCHICHTEN
BATTERIE ENTIÈREMENT SOLIDE COMPRENANT DEUX TYPES DE COUCHES D'ÉLECTROLYTE SOLIDE

(30) Priority: 30.03.2021 KR 20210041332
(43) Date of publication of application: 15.02.2023
(73) Proprietor: LG Energy Solution, Ltd., Seoul 07335 (KR)
(72) Inventor: LEE, Jung Pil, Daejeon 34122 (KR); CHOI, Lak Young, Daejeon 34122 (KR)
(74) Representative: Goddar, Heinz J.
(86) International application number: PCT/KR2022/004404
(87) International publication number: WO 2022/211447

(56) References cited:
- WO-A1-2020/214008
- WO-A1-2021/045039
- JP-A- 2017 069 121
- JP-B2- 3 347 439
- KR-A- 20190 111 996
- KR-A- 20200 042 344
- KR-A- 20200 113 779
- US-A1- 2020 295 405

## Description

### [Technical Field]

This application claims the benefit of priority to Korean Patent Application No. 2021-0041332 filed on March 30, 2021.

The present invention relates to an all-solid-state battery including two kinds of solid electrolyte layers. More particularly, the present invention relates to an all-solid-state battery including two kinds of solid electrolyte layers, wherein adhesive surfaces of the solid electrolyte layer and a negative electrode are increased, whereby a danger of short circuit in the all-solid-state battery is reduced.

### [Background Art]

A lithium secondary battery, which is rechargeable and has high energy density, has attracted attention as a new energy source that has environmentally friendly characteristics, since the lithium secondary battery not only remarkably reduces the use of fossil fuels but also does not generate by-products as the result of the use of energy.

The lithium secondary battery has also been spotlighted as an energy source for devices having high output and high energy density, such as electric vehicles, as well as wearable devices or portable devices. As a result, research on a lithium secondary battery that has high operating voltage and energy density has been conducted at a rapid rate.

A lithium ion secondary battery including an electrolytic solution and a separator, which is a kind of lithium secondary battery, has shortcomings in that there are high dangers of electrolytic solution leakage and fire outbreak. As an alternative thereto, an all-solid-state battery, which uses a nonflammable solid as an electrolyte, whereby dangers of fire outbreak and explosion are low, has been proposed.

The all-solid-state battery has advantages in that safety is improved, the movement speed of lithium ions is high since a solid electrolyte is used, and the thickness of a negative electrode is reduced, whereby energy density is increased.

As a means configured to increase the energy density of the all-solid-state battery, a negative electrode constituted by a current collector alone without inclusion of a negative electrode mixture layer has been proposed.

When the all-solid-state battery configured as described above is charged, lithium is plated on a negative electrode current collector at the part at which the negative electrode current collector and a solid electrolyte layer contact each other, and when the all-solid-state battery is discharged, the lithium plated on the negative electrode current collector is stripped off. As a result of repetitive charging and discharging, the size of the lithium plated on the negative electrode current collector may be gradually increased, whereby lithium dendrites may grow. The lithium dendrites may cause short circuit in the battery or may reduce the capacity of the battery.

That is, when contact surfaces of the negative electrode current collector and the solid electrolyte layer are smaller, lithium plating locally occurs, whereby a possibility of growth of lithium dendrites may further increase.

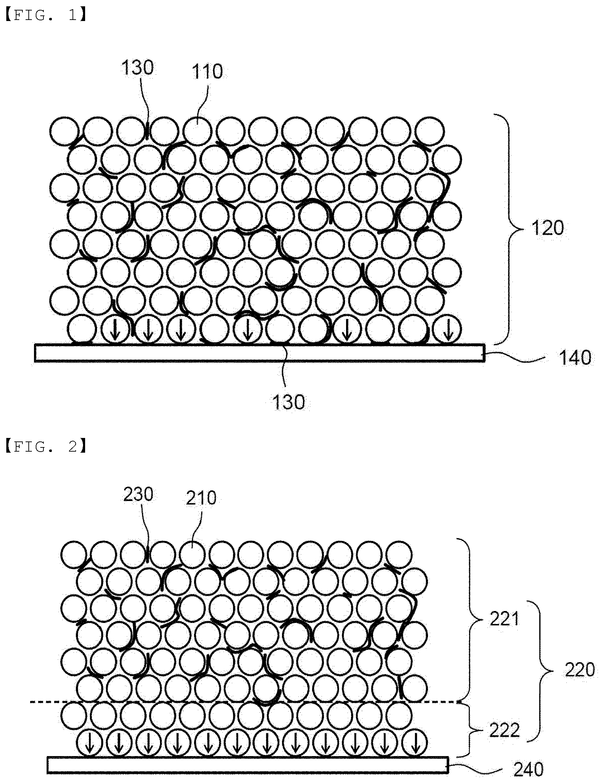

In connection therewith, FIG. 1 is a sectional view of a solid electrolyte layer and a negative electrode in a conventional high energy density all-solid-state battery.

Referring to FIG. 1, the solid electrolyte layer 120 is formed on one surface of the negative electrode 140. The solid electrolyte layer 120 is configured in the state in which solid electrolyte particles 110 are bound by a binder 130, and is disposed at one surface of the negative electrode 140.

Lithium that has moved to the negative electrode 140 through the solid electrolyte particles 110 is plated on the surface of the negative electrode 140; however, lithium cannot move to the negative electrode due to the binder 130 located between the solid electrolyte particles 110 and the negative electrode 140.

In FIG. 1, the solid electrolyte particles allowing lithium to move therethrough, among the solid electrolyte particles contacting the negative electrode, are indicated by arrows, and the solid electrolyte particles having a lithium movement path clogged due to the binder 130 are indicated by no arrows.

If lithium cannot move, or the movement speed of lithium is reduced, due to the binder, as described above, resistance of the all-solid-state battery is increased.

Therefore, there is a need to develop an all-solid-state battery configured such that contact surfaces of a solid electrolyte layer and a negative electrode are increased, whereby resistance of the battery is low.

For an all-solid-state battery having a sulfide-based solid electrolyte applied thereto, a method of manufacturing a solid electrolyte layer by pressing without a binder may be used in order to minimize resistance of the solid electrolyte layer. In this case, however, the solid electrolyte layer is manufactured such that the thickness of the solid electrolyte layer is several hundred micrometers, which is not suitable for manufacturing a high energy density all-solid-state battery.

In connection therewith, Patent Document 1 relates to an all-solid-state battery configured such that an electrolyte layer is disposed between a positive electrode layer and a negative electrode layer, the electrolyte layer includes a first solid electrolyte layer and a second solid electrolyte layer, and a binder is contained in the first solid electrolyte layer and/or the second solid electrolyte layer.

The all-solid-state battery of Patent Document 1 includes a sulfide-based solid electrolyte, and discloses that the binder is included, whereby it is possible to obtain an effect of securing the force of dispersion of sulfide-based solid electrolyte particles, and the thickness of the solid electrolyte layer is small, whereby it is possible to reduce resistance.

Patent Document 2 relates to an electrolyte layer for all-solid-state batteries configured such that two or more electrolyte layers are stacked and the two or more electrolyte layers have different binder contents, and discloses that a substrate is smoothly stripped from the electrolyte layer when a lamination method is used, and the thickness of the electrolyte layer is appropriately adjusted, whereby it is possible to minimize interfacial resistance between an electrode layer and the electrolyte layer.

However, Patent Document 1 and Patent Document 2 do not suggest a method of solving a problem in that the resistance of the all-solid-state battery is increased by the binder included in the solid electrolyte layer.

### (Prior Art Documents)

(Patent Document 1) Japanese Registered Patent Publication No. 5930035 (2016.06.08)
(Patent Document 2) Korean Patent Application Publication No. 2017-0055325 (2017.05.19)

US 2020/295405 A1 discloses a battery including a first portion and a second portion, in which the first portion includes a first positive electrode layer, a first negative electrode layer, and a first solid electrolyte layer located between the first positive electrode layer and the first negative electrode layer, in which the second portion includes a second positive electrode layer, a second negative electrode layer, and a second solid electrolyte layer located between the second positive electrode layer and the second negative electrode layer, in which the first portion and the second portion are in contact with each other, the second portion is more sharply bent than the first portion, the first solid electrolyte layer contains a first binder, the second solid electrolyte layer contains a second binder, and the second solid electrolyte layer containing the second binder has higher flexibility than a flexibility of the first solid electrolyte layer containing the first binder.

WO 2020/214008 A1 discloses a solid electrolyte membrane comprising a solid electrolyte material and metal particles, wherein the metal particles are capable of alloying with lithium.

WO 2021/045039 discloses a solid electrolyte sheet in which a second solid electrolyte layer is formed on at least one of both surfaces of a first solid electrolyte layer, the second solid electrolyte layer is a porous solid electrolyte layer.

### [Disclosure]

### [Technical Problem]

The present invention has been made in view of the above problems, and it is an object of the present invention to provide an all-solid-state battery including two kinds of solid electrolyte layers configured such that growth of lithium dendrites on the surface of a negative electrode is prevented, whereby it is possible to secure safety of the all-solid-state battery.

### [Technical Solution]

An all-solid-state battery according to the present invention to accomplish the above object includes a positive electrode, a negative electrode, and a solid electrolyte interposed between the positive electrode and the negative electrode, wherein the solid electrolyte comprises a first solid electrolyte layer including a binder and a second solid electrolyte layer not including the binder, the second solid electrolyte layer faces the negative electrode and the solid electrolyte layer is configured to have a two-layer structure including the first solid electrolyte layer and the second solid electrolyte layer, wherein the first solid electrolyte layer and the second solid electrolyte layer are configured to function as an ion transfer path between the positive electrode and the negative electrode.

The binder may be at least one selected from the group consisting of polytetrafluoroethylene, polyethylene oxide, polyethyleneglycol, polyacrylonitrile, polyvinylchloride, polymethylmethacrylate, polypropylene oxide, polyphosphazene, polysiloxane, polydimethylsiloxane, polyvinylidene fluoride, a polyvinylidene fluoride-hexafluoropropylene copolymer (PVDF-HFP), a polyvinylidene fluoride-chlorotrifluoroethylene copolymer (PVDF-CTFE), a polyvinylidene fluoride-tetrafluoroethylene copolymer (PVDF-TFE), polyvinylidene carbonate, polyvinylpyrrolidone, styrene-butadiene rubber, nitrile-butadiene rubber, and hydrogenated nitrile butadiene rubber.

The first solid electrolyte layer and the second solid electrolyte layer may have identical other ingredients excluding the binder.

The first solid electrolyte layer may have a thickness equal to or greater than the thickness of the second solid electrolyte layer.

The binder included in the first solid electrolyte layer may be included in an amount of 0.2 weight% to 15 weight% based on the weight of the total solid content included in the first solid electrolyte layer.

The first solid electrolyte layer may be adhered to the second solid electrolyte layer.

The negative electrode may not include a negative electrode mixture layer.

The negative electrode may include a coating layer and an ion transport layer.

Solid electrolyte particles on a surface of the second solid electrolyte layer may be in contact with the negative electrode.

The present invention provides a battery module including the all-solid-state battery as a unit cell.

### [Advantageous Effects]

As is apparent from the above description, in an all-solid-state battery according to the present invention, contact surfaces of a solid electrolyte layer and a negative electrode at the interface therebetween are increased, whereby it is possible to prevent local lithium plating on the surface of the negative electrode.

Consequently, it is possible to inhibit growth of lithium dendrites on the surface of the negative electrode.

As a result, a danger of short circuit in the all-solid-state battery is lowered, whereby it is possible to improve safety of the all-solid-state battery.

In addition, a lithium movement path is widely secured, whereby it is possible to reduce resistance of the all-solid-state battery.

### [Description of Drawings]

FIG. 1 is a sectional view of a solid electrolyte layer and a negative electrode in a conventional high energy density all-solid-state battery.
FIG. 2 is a sectional view of a solid electrolyte layer and a negative electrode in an all-solid-state battery according to the present invention.

### [Best Mode]

Now, preferred embodiments of the present invention will be described in detail with reference to the accompanying drawings such that the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Also, in the description of the invention and the claims, singular forms are intended to include plural forms unless mentioned otherwise.

Also, in the description of the invention and the claims, "or" includes "and" unless mentioned otherwise. Therefore, "including A or B" means three cases, namely, the case including A, the case including B, and the case including A and B.

Embodiments of the present invention will be described in detail with reference to the accompanying drawings.

An all-solid-state battery according to the present invention may include a positive electrode, a negative electrode, and a solid electrolyte interposed between the positive electrode and the negative electrode, wherein the solid electrolyte may be constituted by a first solid electrolyte layer including a binder and a second solid electrolyte layer including no binder, and the second solid electrolyte layer may face the negative electrode.

The positive electrode is manufactured, for example, by applying a positive electrode mixture including a positive electrode active material to a positive electrode current collector and drying the positive electrode mixture. The positive electrode mixture may further optionally include a binder, a conductive agent, and a filler, as needed.

The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase the force of adhesion of the positive electrode active material. The positive electrode current collector may be configured in any of various forms, such as a film, a sheet, a foil, a net, a porous body, a foam body, and a non-woven fabric body.

The positive electrode active material is a material that is capable of inducing electrochemical reaction, and may include at least one of positive electrode active materials represented by Chemical Formulas 1 to 3 below.

LiₐCo₁₋ₓMₓO₂ (1)

LiₐMn_{2-y}M_{y}O₄ (2)

LiₐFe_{1-z}M₂PO₄ (3)

In the above formulas, 0.8≤a≤1.2, 0≤x≤0.8, 0≤y≤0.6, and 0≤z≤0.5, and
M is at least one selected from the group consisting of Ti, Cd, Cu, Cr, Mo, Mg, Al, Ni, Mn, Nb, V, and Zr.

That is, the positive electrode active material may include at least one material selected from the group consisting of a lithium metal oxide having a layered structure represented by Chemical Formula 1, a lithium-manganese-based oxide having a spinel structure represented by Chemical Formula 2, and a lithium-containing phosphate having an olivine structure represented by Chemical Formula 3.

Although the kind of the lithium metal oxide having the layered structure is not restricted, for example, at least one selected from the group consisting of lithium cobalt oxide, lithium nickel oxide, lithium manganese oxide, lithium cobalt-nickel oxide, lithium cobalt-manganese oxide, lithium manganese-nickel oxide, lithium nickel-cobalt-manganese oxide, and a material derived therefrom by substituting or doping with another element may be used.

The lithium nickel-cobalt-manganese oxide may be represented by Li_{1+z}Ni_{b}Co_{c}Mn_{1-(b+c+d)}M_{d}O₍₂₋ₑ₎Aₑ (where - 0.5≤z≤0.5, 0.1≤b≤0.8, 0.1≤c≤0.8, 0≤d≤0.2, 0≤e≤0.2, b+c+d<1, M = Al, Mg, Cr, Ti, Si, or Y, and A = F, P, or Cl).

Although the kind of the lithium-manganese-based oxide having the spinel structure is also not restricted, for example, at least one selected from the group consisting of lithium manganese oxide, lithium nickel manganese oxide, and a material derived therefrom by substituting or doping with another element may be used.

In addition, although the kind of the lithium-containing phosphate having the olivine structure is also not restricted, for example, at least one selected from the group consisting of lithium iron phosphate and a material derived therefrom by substituting or doping with another element may be used.

The another element may be at least one selected from the group consisting of Al, Mg, Mn, Ni, Co, Cr, V, and Fe.

The binder is a component assisting in binding between the active material and the conductive agent and in binding with the current collector. The binder is generally added in an amount of 1 weight% to 30 weight% based on the total weight of the mixture including the positive electrode active material. For example, the binder may include at least one selected from the group consisting of polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer (EPDM) rubber, styrene butadiene rubber, fluoro rubber, and a copolymer thereof.

The conductive agent is generally added such that the conductive agent accounts for 1 weight% to 30 weight% based on the total weight of the mixture including the positive electrode active material. The conductive agent is not particularly restricted, as long as the conductive agent exhibits high conductivity without inducing any chemical change in a battery to which the conductive agent is applied. For example, graphite, such as natural graphite or artificial graphite; carbon black, such as ethylene black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; a conductive material, such as a polyphenylene derivative; graphene; or carbon nanotube may be used as the conductive agent.

The filler is an optional component used to inhibit expansion of the electrode. There is no particular limit to the filler, as long as the filler is made of a fibrous material while the filler does not cause chemical changes in a battery to which the filler is applied. For example, a polyolefin-based polymer, such as polyethylene or polypropylene; or a fibrous material, such as glass fiber or carbon fiber, is used as the filler.

In a concrete example, the negative electrode may be constituted by only a negative electrode current collector without inclusion of a negative electrode mixture layer.

The negative electrode current collector is generally manufactured so as to have a thickness of 3 µm to 500 µm. The negative electrode current collector is not particularly restricted, as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase binding force of the negative electrode active material, in the same manner as the positive electrode current collector. The negative electrode current collector may be configured in any of various forms, such as a film, a sheet, a foil, a net, a porous body, a foam body, and a non-woven fabric body.

In a concrete example, the negative electrode may include a negative electrode current collector and lithium metal formed on at least one surface of the negative electrode current collector by coating. A method of adding the lithium metal is not particularly restricted. For example, the lithium metal may be added using a deposition method selected from the group consisting of a thermal deposition method, an e-beam deposition method, a chemical vapor deposition method, and a physical vapor deposition method.

FIG. 2 is a sectional view of a solid electrolyte layer and a negative electrode in an all-solid-state battery according to the present invention.

Referring to FIG. 2, the solid electrolyte layer 220 is provided at one surface of the negative electrode 240. The solid electrolyte layer 220 is configured to have a two-layer structure including a first solid electrolyte layer 221 and a second solid electrolyte layer 222.

The first solid electrolyte layer 221 includes a binder 230, and the second solid electrolyte layer 222 includes no binder. The second solid electrolyte layer 222 is disposed so as to face the negative electrode 240. Solid electrolyte particles 210 located at the surface of the second solid electrolyte layer 222 are in contact with the negative electrode 240.

The binder performs a function of securing the force of binding between the solid electrolyte particles and the force of binding with the electrode, whereas the binder may reduce mobility of lithium ions. In particular, when lithium plating occurs only on a local region of the surface of the negative electrode due to the binder at the contact surfaces of the second solid electrolyte layer 222 and the negative electrode 240, as in the solid electrolyte layer and the negative electrode shown in FIG. 1, a lithium nucleus is easily generated, whereby a possibility of formation of lithium dendrites increases.

In the present invention, therefore, the second solid electrolyte layer, which is in contact with the negative electrode, is configured to include no binder, wherein the solid electrolyte particles located at the outermost layer of the second solid electrolyte layer, which is opposite the negative electrode, may be brought into direct contact with the negative electrode. Consequently, it is possible to increase contact surfaces of the negative electrode and the solid electrolyte particles. That is, as indicted by arrows, lithium is movable from all the solid electrolyte particles located at the outermost layer to the negative electrode 240.

In the above structure, the occurrence of lithium dendrites is inhibited, whereby it is possible to reduce the occurrence of short circuit in the all-solid-state battery

For example, the binder may include at least one selected from the group consisting of polytetrafluoroethylene, polyethylene oxide, polyethyleneglycol, polyacrylonitrile, polyvinylchloride, polymethylmethacrylate, polypropylene oxide, polyphosphazene, polysiloxane, polydimethylsiloxane, polyvinylidene fluoride, a polyvinylidene fluoride-hexafluoropropylene copolymer (PVDF-HFP), a polyvinylidene fluoride-chlorotrifluoroethylene copolymer (PVDF-CTFE), a polyvinylidene fluoride-tetrafluoroethylene copolymer (PVDF-TFE), polyvinylidene carbonate, polyvinylpyrrolidone, styrene-butadiene rubber, nitrile-butadiene rubber, and hydrogenated nitrile butadiene rubber.

The binder may be included in the first solid electrolyte layer so as to account for 0.2 weight% to 15 weight%, specifically 1 weight% to 10 weight%, more specifically 1 weight% to 5 weight%, based on the weight of the total solid content included in the first solid electrolyte layer.

If the content of the binder is less than 0.2 weight%, the force of binding between the solid electrolyte particles is low, whereby it is difficult to constitute the solid electrolyte layer and short circuit may easily occur, which is undesirable. If the content of the binder is greater than 15 weight%, ionic conductivity may be greatly reduced, which is also undesirable.

In consideration of the fact that the binder functions to secure the force of binding between the solid electrolyte particles in the solid electrolyte layer 220, the thickness of the first solid electrolyte layer, which includes the binder, may be equal to or greater than the thickness of the second solid electrolyte layer in order to secure stability in shape of the solid electrolyte layer.

For example, the thickness of the first solid electrolyte layer may be 100% to 1,000%, specifically greater than 100% to 500%, of the thickness of the second solid electrolyte layer.

In addition, if the total thickness of the solid electrolyte layer is too large, resistance may increase, and if the total thickness of the solid electrolyte layer is too small, low strength and insulation may become a problem. Consequently, the total thickness of the solid electrolyte layer may range from 20 µm to 100 µm.

In a concrete example, the first solid electrolyte layer may have a minimum thickness of 10 µm, and the second solid electrolyte layer may have a minimum thickness of 10 µm. That is, if the second solid electrolyte layer is thicker than the first solid electrolyte layer, it is possible to obtain an advantageous effect in securing ionic conductivity; however, adhesive force of the solid electrolyte layer is low, whereby it may be difficult to handle the solid electrolyte layer, which is undesirable.

The first solid electrolyte layer and the second solid electrolyte layer function as an ion transfer path between the positive electrode and the negative electrode. In order to prevent reduction of ionic conductivity, the first solid electrolyte layer and the second solid electrolyte layer may be completely adhered to each other over the entirety of the interface therebetween.

In a concrete example, the first solid electrolyte layer and the second solid electrolyte layer may have identical other ingredients excluding the binder.

For example, the solid electrolytes included in the first solid electrolyte layer and the second solid electrolyte layer may be identical in kind to each other, and each of the solid electrolytes may be any one selected from the group consisting of a sulfide-based solid electrolyte, an oxide-based solid electrolyte, and a polymer-based solid electrolyte.

The sulfide-based solid electrolyte may be a compound that contains a sulfur atom (S), exhibits ionic conductivity of metal belonging to Group 1 or 2 of the periodic table, and exhibits electron insulation. It is preferable for the sulfide-based solid electrolyte to contain at least Li, S, and P as elements and to exhibit lithium ion conductivity; however, elements other than Li, S, and P may be included depending on purposes or circumstances.

Specifically, Li₆PS₅Cl, Li₂S-P₂S₅, Li₂S-P₂S₅-LiCl, Li₂S-P₂S₅-H₂S, Li₂S-P₂S₅-H₂S-LiCl, Li₂S-LiI-P₂S₅, Li₂S-LiI-Li₂O-P₂S₅, Li₂S-LiBr-P₂S₅, Li₂SLi₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂S-Ga₂S₃. Li₂S-GeS₂-Ga₂S₃, Li₂S-GeS₂-P₂S₅, Li₂S-GeS₂-Sb₂S₅. Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, or Li₁₀GeP₂S₁₂ may be used as a sulfide-based inorganic solid electrolyte.

An amorphization method may be used as a method of synthesizing a sulfide-based inorganic solid electrolyte material. Examples of the amorphization method may include a mechanical milling method, a solution method, and a melting and rapid cooling method. Processing at a normal temperature (25°C) is possible, and therefore it is possible to simplify a manufacturing process.

The oxide-based solid electrolyte may be a compound that contains an oxygen atom (O), exhibits ionic conductivity of metal belonging to Group 1 or 2 of the periodic table, and exhibits electron insulation.

As the oxide-based solid electrolyte, for example, there may be used LiₓₐLa_{ya}TiO₃ (xa=0.3 to 0.7 and ya=0.3 to 0.7) (LLT), Li_{xb}La_{yb}Zr_{zb}M^{bb}_{mb}O_{nb} (where M^{bb} is at least one of Al, Mg, Ca, Sr, V, Nb, Ta, Ti, Ge, In, and Sn, xb satisfies 5≤xb≤10, yb satisfies 1≤yb≤4, zb satisfies 1≤zb≤4, mb satisfies 0≤mb≤2, and nb satisfies 5≤nb≤20), Li_{xc}B_{yc}M^{cc}_{zc}O_{nc} (where M^{cc} is at least one of C, S, Al, Si, Ga, Ge, In, and Sn, xc satisfies 0≤xc≤5, yc satisfies 0≤yc≤1, zc satisfies 0≤zc≤1, and nc satisfies 0≤nc≤6), Li_{xd}(Al, Ga)_{yd}(Ti, Ge)_{zd}Si_{ad}P_{md}O_{nd} (where 1≤xd≤3, 0≤yd≤1, 0≤zd≤2, 0≤ad≤1, 1≤md≤7, and 3≤nd≤13), Li₍₃₋₂ₓₑ₎M^{ee}ₓₑD^{ee}_{O} (where xe indicates a number between 0 and 0.1, M^{ee} indicates a bivalent metal atom, and D^{ee} indicates a halogen atom or a combination of two or more kinds of halogen atoms), Li_{xf}Si_{yf}O_{zf} (1≤xf≤5, 0<yf≤3, and 1≤zf≤10), Li_{xg}S_{yg}O_{zg} (1≤xg≤3, 0<yg≤2, and 1≤zg≤10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w<1), Li_{3.5}Zn_{0.25}GeO₄ having a lithium super ionic conductor (LISICON) type crystalline structure, La_{0.55}Li_{0.35}TiO₃ having a perovskite type crystalline structure, LiTi₂P₃O₁₂ having a sodium super ionic conductor (NASICON) type crystalline structure, Li_{1+xh+yh}(Al, Ga)ₓₕ(Ti, Ge)₂₋ₓₕSi_{yh}P_{3-yh}O₁₂ (where 0≤xh≤1 and 0≤yh≤1), or Li₇La₃Zr₂O₁₂ (LLZ) having a garnet type crystalline structure. Alternatively, a phosphorus compound including Li, P, and O may also be used. For example, lithium phosphate (Li₃PO₄), LiPON in which a portion of oxygen in lithium phosphate is replaced by nitrogen, or LiPOD¹ (D¹ being at least one selected from among Ti, V, Cr, Mn, Fe, Co, Ni, Cu, Zr, Nb, Mo, Ru, Ag, Ta, W, Pt, and Au) may be used. Alternatively, LiA¹ON (A¹ being at least one selected from among Si, B, Ge, Al, C, and Ga) may also be used.

The polymer-based solid electrolyte may be a solid polymer electrolyte formed by adding a polymer resin to a lithium salt that is independently solvated or a polymer gel electrolyte formed by impregnating a polymer resin with an organic electrolytic solution containing an organic solvent and a lithium salt.

The solid polymer electrolyte is not particularly restricted as long as the solid polymer electrolyte is made of, for example, a polymer material that is ionically conductive and is generally used as a solid electrolyte material of the all-solid-state battery. Examples of the solid polymer electrolyte may include a polyether-based polymer, a polycarbonate-based polymer, an acrylate-based polymer, a polysiloxane-based polymer, a phosphazene-based polymer, polyethylene oxide, a polyethylene derivative, an alkylene oxide derivative, a phosphoric acid ester polymer, poly agitation lysine, polyester sulfide, polyvinyl alcohol, polyvinylidene fluoride, and a polymer containing an ionic dissociation group. Alternatively, the solid polymer electrolyte may include a branched copolymer formed by copolymerizing an amorphous polymer, such as polymethylmethacrylate (PMMA), polycarbonate, polysiloxane, and/or phosphazene, as a comonomer, in the main chain of polyethylene oxide (PEO), which is a polymer resin, a comb-like polymer resin, and a crosslinking polymer resin.

The polymer gel electrolyte includes an organic electrolytic solution including a lithium salt and a polymer resin, wherein the organic electrolytic solution may be included in an amount of 60 parts to 400 parts by weight based on weight of the polymer resin. Although the polymer resin applied to the polymer gel electrolyte is not limited to specific components, for example, a polyvinylchloride (PVC)-based resin, a polymethylmethacrylate (PMMA)-based resin, polyacrylonitrile (PAN), polyvinylidene fluoride (PVDF), and polyvinylidene fluoride hexafluoropropylene (PVDF-HFP) may be included.

The present invention provides a battery module including the all-solid-state battery as a unit cell, and the battery module may be used as an energy source of a medium to large device that requires high-temperature stability, long cycle characteristics, and high capacity characteristics.

As examples of the medium to large device, there may be a power tool driven by a battery-powered motor, electric automobiles, including an electric vehicle (EV), a hybrid electric vehicle (HEV), and a plug-in hybrid electric vehicle (PHEV), electric two-wheeled vehicles, including an electric bicycle (E-bike) and an electric scooter (E-scooter), an electric golf cart, and an energy storage system. However, the present invention is not limited thereto.

Hereinafter, the present invention will be described with reference to the following examples. These examples are provided only for easier understanding of the present invention and should not be construed as limiting the scope of the present invention.

### <Manufacturing Example 1>

In order to manufacture a solid electrolyte layer, argyrodite (Li₆PS₅Cl), as a solid electrolyte, and polytetrafluoroethylene, as a binder, were dispersed in anisole in a weight ratio of 95:5, and were stirred to manufacture a first solid electrolyte layer slurry.

A polyethylene terephthalate (PET) release film was coated with the first solid electrolyte layer slurry, and the first solid electrolyte layer slurry was dried in a vacuum state at 100°C for 12 hours to manufacture a first solid electrolyte layer having a thickness of 50 µm.

Argyrodite, as a solid electrolyte, alone was dispersed and stirred in anisole to manufacture a second solid electrolyte layer slurry. A polyethylene terephthalate release film was coated with the second solid electrolyte layer slurry, and the second solid electrolyte layer slurry was dried in a vacuum state at 100°C for 12 hours to manufacture a second solid electrolyte layer having a thickness of 30 µm.

The second solid electrolyte layer was stacked on one surface of the first solid electrolyte layer to manufacture a solid electrolyte layer.

### <Manufacturing Example 2>

A solid electrolyte layer was manufactured using the same method as in Manufacturing Example 1 except that the first solid electrolyte layer was manufactured so as to have a thickness of 30 µm, unlike Manufacturing Example 1.

### <Manufacturing Example 3>

A solid electrolyte layer constituted by only the first solid electrolyte layer having a thickness of 50 µm manufactured according to Manufacturing Example 1 was manufactured.

### <Reference Example>

No solid electrolyte layer was separately manufactured, a Ti mold was filled with argyrodite powder, and ionic conductivity of the argyrodite powder was measured.

### <Experimental Example 1> Ionic conductivity of solid electrolyte layer

In order to measure ionic conductivity of each of the solid electrolyte layers manufactured according to Manufacturing Example 1 to Manufacturing Example 3 and the argyrodite powder of Reference Example, the solid electrolyte layer was interposed between Ni current collectors, the solid electrolyte layer and the Ni current collectors were placed in an aluminum pouch, and the aluminum pouch was sealed in a vacuum state to manufacture an all-solid-state battery.

The all-solid-state battery was fastened to a jig, a pressure of 10 MPa was applied, and ionic conductivity was measured using impedance spectroscopy. The results are shown in Table 1 below.

**[Table 1]**

| | Ionic conductivity (mS/cm) |
|---|---|
| Manufacturing Example 1 | 0.6 |
| Manufacturing Example 2 | 0.7 |
| Manufacturing Example 3 | 0.4 |
| Reference Example | 2.0 |

Referring to Table 1 above, it can be seen that the measured ionic conductivity of the argyrodite of Reference Example was 2.0 mS/cm, which is high, whereas ionic conductivity was reduced in each of Manufacturing Example 1 to Manufacturing Example 3 including the first solid electrolyte layer including the binder.

The reason for this is that the binder added to impart the force of adhesion between argyrodite particles at the time of manufacture of the solid electrolyte was interposed between the argyrodite particles, whereby ionic conductivity was reduced.

The solid electrolyte according to each of Manufacturing Example 1 and Manufacturing Example 2 including the second solid electrolyte layer including no binder exhibits higher ionic conductivity than the solid electrolyte according to Manufacturing Example 3 constituted by only the first solid electrolyte layer including the binder.

Consequently, in order to minimize reduction in ionic conductivity and particularly to increase contact between a negative electrode and the solid electrolyte layer at the interface between the negative electrode and the solid electrolyte layer at which Li plating/stripping occurs at the time of charging and discharging, it is preferable to provide both the first solid electrolyte layer including the binder and the second solid electrolyte layer including no binder.

### <Example 1>

In order to manufacture a positive electrode for all-solid-state batteries, LiNi_{0.8}Co_{0.1}Mn_{0.1}O₂, as a positive electrode active material, argyrodite (Li₆PS₅Cl), as a solid electrolyte, furnace black, as a conductive agent, and polytetrafluoroethylene, as a binder, were dispersed in anisole in a weight ratio of 77.5:19.5:1.5:1.5, and were stirred to manufacture a positive electrode slurry. The positive electrode slurry was applied to an aluminum current collector having a thickness of 14 µm by doctor blade coating, and was dried in a vacuum state at 100°C for 12 hours to manufacture a positive electrode.

In order to manufacture a negative electrode for all-solid-state batteries including a coating layer and an ion transport layer, sputtering using Ag was performed on a nickel current collector having a thickness of 10 µm so as to have a size of 30 nm, whereby a coating layer constituted by an Ag layer was formed. Subsequently, a slurry constituted by a mixture of acetylene black and polyvinylidene fluoride mixed in a weight ratio of 97:3 was provided on the Ag layer by coating to form an ion transport layer, and the ion transport layer was dried, whereby a negative electrode having a multilayer structure was manufactured.

In order to manufacture a solid electrolyte layer, argyrodite (Li₆PS₅Cl), as a solid electrolyte, and polytetrafluoroethylene, as a binder, were dispersed in anisole in a weight ratio of 95:5, and were stirred to manufacture a first solid electrolyte layer slurry.

The first solid electrolyte layer slurry was applied to a polyethylene terephthalate (PET) release film by coating, and was dried in a vacuum state at 100°C for 12 hours to form a first solid electrolyte layer having a thickness of 50 µm.

Argyrodite, as a solid electrolyte, alone was dispersed and stirred in anisole to manufacture a second solid electrolyte layer slurry. Subsequently, the second solid electrolyte layer slurry was applied to a polyethylene terephthalate release film by coating, and was dried in a vacuum state at 100°C for 12 hours to form a second solid electrolyte layer having a thickness of 30 µm.

The second solid electrolyte layer was stacked on one surface of the first solid electrolyte layer to manufacture a solid electrolyte layer.

The solid electrolyte layer was interposed between the positive electrode and the negative electrode such that the second solid electrolyte layer faced the negative electrode and such that the first solid electrolyte layer faced the positive electrode, the positive electrode, the solid electrolyte layer, and the negative electrode were placed in an aluminum pouch, and the aluminum pouch was hermetically sealed to manufacture an all-solid-state battery.

### <Example 2>

An all-solid-state battery was manufactured using the same method as in Example 1 except that the thickness of the first solid electrolyte layer was 30 µm, unlike Example 1.

### <Comparative Example 1>

An all-solid-state battery was manufactured using the same method as in Example 1 except that the solid electrolyte layer was constituted by only the first solid electrolyte layer having a thickness of 50 µm, unlike Example 1.

### <Comparative Example 2>

An all-solid-state battery was manufactured using the same method as in Example 1 except that the solid electrolyte layer was constituted by only the second solid electrolyte layer having a thickness of 30 µm, unlike Example 1.

### <Comparative Example 3>

An all-solid-state battery was manufactured using the same method as in Example 1 except that the solid electrolyte layer was interposed between the positive electrode and the negative electrode such that the first solid electrolyte layer faced the negative electrode and such that the second solid electrolyte layer faced the positive electrode, unlike Example 1.

### <Experimental Example 2>

The all-solid-state batteries manufactured according to Example 1, Example 2, and Comparative Example 1 to Comparative Example 3 were prepared, were charged to 4.25 V at 0.05 C in a constant current-constant voltage mode at 60°C, and were discharged to 3.0 V at 0.05 C to measure initial charge and discharge capacities and efficiencies thereof.

Also, in order to evaluate lifespan characteristics of the all-solid-state batteries, charging and discharging were performed five times within a voltage range of 4.25 V to 3.0 V under 0.1 C charging/0.1 C discharging conditions.

The measured initial charge capacity, initial discharge capacity, charging and discharging efficiency, and retention rate of each of the all-solid-state batteries are shown in Table 2 below.

In Table 2 below, the initial charge capacity and the initial discharge capacity indicate the charge capacity and discharge capacity at the first cycle, respectively, and the charging and discharging efficiency indicates a ratio of the discharge capacity to the charge capacity measured at the first cycle. Also, in Table 2 below, the retention rate indicates a ratio of the discharge capacity measured at the fifth cycle to the discharge capacity measured at the first cycle.

**[Table 2]**

| | Initial charge capacity (mAh) | Initial discharge capacity (mAh) | Charging and discharging efficiency (%) | Retention rate (%@5cycle) |
|---|---|---|---|---|
| Example 1 | 27.0 | 24.2 | 89.6 | 99.9 |
| Example 2 | 28.7 | 25.8 | 89.9 | 99.7 |
| Comparative Example 1 | 23.4 | 20.3 | 86.8 | 92.8 |
| Comparative Example 2 | - | - | - | - |
| Comparative Example 3 | 27.3 | 24.3 | 89.0 | 94.9 |

Referring to Table 2 above, it can be seen that the all-solid-state batteries according to Example 1 and Example 2 have higher charging and discharging efficiency than the all-solid-state battery according to Comparative Example 1. The reason for this seems to be that, as can be seen from Experimental Example 1 above, ionic conductivity of the solid electrolyte layer including the first solid electrolyte layer and the second solid electrolyte layer is higher than ionic conductivity of the solid electrolyte layer constituted by only the first solid electrolyte layer.

In the all-solid-state battery according to Comparative Example 2, in which the solid electrolyte layer was constituted by only the second solid electrolyte layer including no binder, the strength of the solid electrolyte layer was low, whereby there was much difficulty in manufacturing the all-solid-state battery, and short circuit occurred at the time of initial charging, whereby evaluation was impossible.

When comparing lifespan characteristics, the retention rate of each of Example 1 and Example 2 is higher than the retention rate of Comparative Example 1.

Also, when comparing Example 1 and Example 2 with Comparative Example 3, contact between the solid electrolyte particles and the negative electrode is increased in Example 1 and Example 2, since the second solid electrolyte layer having no binder was disposed so as to face the negative electrode, whereby formation of lithium dendrites may be delayed, and therefore the retention rate may be maintained high.

As described above, the all-solid-state battery according to the present invention may include a structure in which contact surfaces of the solid electrolyte layer and the negative electrode are extended, whereby reduction in ionic conductivity may be inhibited, and therefore it is possible to provide an all-solid-state battery with improved lifespan characteristics.

### (Description of Reference Numerals)

110, 210: Solid electrolyte particles
120, 220: Solid electrolyte layers
130, 230: Binders
140, 240: Negative electrodes
221: First solid electrolyte layer
222: Second solid electrolyte layer

## Claims

1. An all-solid-state battery comprising:
a positive electrode;
a negative electrode; and
a solid electrolyte interposed between the positive electrode and the negative electrode,
wherein the solid electrolyte comprises a first solid electrolyte layer comprising a binder and a second solid electrolyte layer not including the binder,
wherein the second solid electrolyte layer faces the negative electrode; and
the solid electrolyte layer is configured to have a two-layer structure including the first solid electrolyte layer and the second solid electrolyte layer, wherein the first solid electrolyte layer and the second solid electrolyte layer are configured to function as an ion transfer path between the positive electrode and the negative electrode.

2. The all-solid-state battery according to claim 1, wherein the binder is at least one selected from the group consisting of polytetrafluoroethylene, polyethylene oxide, polyethyleneglycol, polyacrylonitrile, polyvinylchloride, polymethylmethacrylate, polypropylene oxide, polyphosphazene, polysiloxane, polydimethylsiloxane, polyvinylidene fluoride, a polyvinylidene fluoride-hexafluoropropylene copolymer (PVDF-HFP), a polyvinylidene fluoride-chlorotrifluoroethylene copolymer (PVDF-CTFE), a polyvinylidene fluoride-tetrafluoroethylene copolymer (PVDF-TFE), polyvinylidene carbonate, polyvinylpyrrolidone, styrene-butadiene rubber, nitrile-butadiene rubber, and hydrogenated nitrile butadiene rubber.

3. The all-solid-state battery according to claim 1, wherein the first solid electrolyte layer and the second solid electrolyte layer have identical other ingredients excluding the binder.

4. The all-solid-state battery according to claim 1, wherein the first solid electrolyte layer has a thickness equal to or greater than a thickness of the second solid electrolyte layer.

5. The all-solid-state battery according to claim 1, wherein the binder in the first solid electrolyte layer is included in an amount of 0.2 weight% to 15 weight% based on the weight of a total solid content included in the first solid electrolyte layer.

6. The all-solid-state battery according to claim 1, wherein the first solid electrolyte layer is adhered to the second solid electrolyte layer.

7. The all-solid-state battery according to claim 1, wherein the negative electrode does not include a negative electrode mixture layer.

8. The all-solid-state battery according to claim 1, wherein solid electrolyte particles on a surface of the second solid electrolyte layer are in contact with the negative electrode.

9. A battery module comprising the all-solid-state battery according to any one of claims 1 to 8, wherein the all-solid-state battery is a unit cell.

## Patentansprüche

1. Festkörperbatterie, die Folgendes umfasst:
eine positive Elektrode;
eine negative Elektrode; und
einen Festelektrolyten, der zwischen der positiven Elektrode und der negativen Elektrode angeordnet ist,
wobei der Festelektrolyt eine erste Festelektrolytschicht, die ein Bindemittel umfasst, und eine zweite Festelektrolytschicht, die das Bindemittel nicht enthält, umfasst,
wobei die zweite Festelektrolytschicht der negativen Elektrode zugewandt ist; und
die Festelektrolytschicht so konfiguriert ist, dass sie eine Zweischichtstruktur aufweist, die die erste Festelektrolytschicht und die zweite Festelektrolytschicht enthält, wobei die erste Festelektrolytschicht und die zweite Festelektrolytschicht so konfiguriert sind, dass sie als ein Ionenübertragungsweg zwischen der positiven Elektrode und der negativen Elektrode fungieren.

2. Festkörperbatterie nach Anspruch 1, wobei das Bindemittel mindestens eines ist, das aus der Gruppe ausgewählt ist, die aus Polytetrafluorethylen, Polyethylenoxid, Polyethylenglycol, Polyacrylnitril, Polyvinylchlorid, Polymethylmethacrylat, Polypropylenoxid, Polyphosphazen, Polysiloxan, Polydimethylsiloxan, Polyvinylidenfluorid, einem Polyvinylidenfluorid-Hexafluorpropylen-Copolymer (PVDF-HFP), einem Polyvinylidenfluorid-Chlortrifluorethylen-Copolymer (PVDF-CTFE), einem Polyvinylidenfluorid-Tetrafluorethylen-Copolymer (PVDF-TFE), Polyvinylidencarbonat, Polyvinylpyrrolidon, Styrol-Butadien-Kautschuk, Nitril-Butadien-Kautschuk und hydriertem Nitril-Butadien-Kautschuk besteht.

3. Festkörperbatterie nach Anspruch 1, wobei die erste Festelektrolytschicht und die zweite Festelektrolytschicht identische andere Bestandteile aufweisen, die das Bindemittel ausschließen.

4. Festkörperbatterie nach Anspruch 1, wobei die erste Festelektrolytschicht eine Dicke aufweist, die gleich oder größer als eine Dicke der zweiten Festelektrolytschicht ist.

5. Festkörperbatterie nach Anspruch 1, wobei das Bindemittel in der ersten Festelektrolytschicht in einer Menge von 0,2 Gew.-% bis 15 Gew.-%, bezogen auf das Gewicht eines Gesamtfeststoffgehalts, der in der ersten Festelektrolytschicht enthalten ist, enthalten ist.

6. Festkörperbatterie nach Anspruch 1, wobei die erste Festelektrolytschicht an der zweiten Festelektrolytschicht haftet.

7. Festkörperbatterie nach Anspruch 1, wobei die negative Elektrode keine Mischschicht der negativen Elektrode enthält.

8. Festkörperbatterie nach Anspruch 1, wobei Festelektrolytpartikel auf einer Oberfläche der zweiten Festelektrolytschicht mit der negativen Elektrode in Kontakt stehen.

9. Batteriemodul, das die Festkörperbatterie nach einem der Ansprüche 1 bis 8 umfasst, wobei die Festkörperbatterie eine Einheitszelle ist.

## Revendications

1. Batterie tout-solide comprenant :
une électrode positive ;
une électrode négative ; et
un électrolyte solide interposé entre l'électrode positive et l'électrode négative,
dans laquelle l'électrolyte solide comprend une première couche d'électrolyte solide comprenant un liant et une deuxième couche d'électrolyte solide n'incluant pas de liant,
dans laquelle la deuxième couche d'électrolyte solide fait face à l'électrode négative ; et
la couche d'électrolyte solide est configurée pour avoir une structure à deux couches incluant la première couche d'électrolyte solide et la deuxième couche d'électrolyte solide, dans laquelle la première couche d'électrolyte solide et la deuxième couche d'électrolyte solide sont configurées pour fonctionner comme chemin de transfert d'ions entre l'électrode positive et l'électrode négative.

2. Batterie tout-solide selon la revendication 1, dans laquelle un ou plusieurs éléments sont sélectionnés dans le groupe constitué de polytétrafluoroéthylène, oxyde de polyéthylène, polyéthylèneglycol, polyacrylonitrile, polychlorure de vinyle, méthacrylate de polyméthyle, oxyde de polypropylène, polyphosphazène, polysiloxane, polydiméthylsiloxane, fluorure de polyvinylidène, un copolymère de fluorure de polyvinylidène-hexafluoropropylène (PVDF-HFP), un copolymère de fluorure de polyvinylidène-chlorotrifluoroéthylène (PVDF-CTFE), un copolymère de fluorure de polyvinylidène-tétrafluoroéthylène (PVDF-TFE), carbonate de polyvinylidène, polyvinylpyrrolidone, caoutchouc styrène-butadiène, caoutchouc nitrile-butadiène et caoutchouc butadiène nitrile hydrogéné.

3. Batterie tout-solide selon la revendication 1, dans laquelle la première couche d'électrolyte solide et la deuxième couche d'électrolyte solide ont d'autres ingrédients identiques excepté le liant.

4. Batterie tout-solide selon la revendication 1, dans laquelle la première couche d'électrolyte solide a une épaisseur égale ou supérieure à une épaisseur de la deuxième couche d'électrolyte solide.

5. Batterie tout-solide selon la revendication 1, dans laquelle le liant dans la première couche d'électrolyte solide est inclus dans une quantité de 0,2 % en poids à 15 % en poids sur la base du poids de la teneur en solides totale inclus dans la première couche d'électrolyte solide.

6. Batterie tout-solide selon la revendication 1, dans laquelle la première couche d'électrolyte solide est collée à la deuxième couche d'électrolyte solide.

7. Batterie tout-solide selon la revendication 1, dans laquelle l'électrode négative n'inclut pas une couche de mélange d'électrode négative.

8. Batterie tout-solide selon la revendication 1, dans laquelle des particules d'électrolyte solide sur une surface de la deuxième couche d'électrolyte solide sont en contact avec l'électrode négative.

9. Module de batterie comprenant la batterie tout-solide selon l'une quelconque des revendications 1 à 8, dans lequel la batterie tout-solide est une cellule unitaire.
